# EUROPÄISCHE PATENTANMELDUNG

(11) **EP 3 599 394 A1**
(43) Veröffentlichungstag der Anmeldung: **29.01.2020**
(21) Anmeldenummer: 18184997.7
(22) Anmeldetag: 23.07.2018
(51) Int. Cl.: F16H 37/04, F16H 1/28, F16H 1/46, F03D 15/00

(54) **KOPPELGETRIEBE FÜR WINDKRAFTANLAGEN UND INDUSTRIE-APPLIKATIONEN**

(71) Anmelder: Flender GmbH, 46395 Bocholt (DE)
(72) Erfinder: Papies, Jennifer, 44797 Bochum (DE); Jorke, Silvia, 46117 Oberhausen (DE)
(74) Vertreter: Maier, Daniel Oliver

(57) **Zusammenfassung**

Die Erfindung betrifft ein Koppelgetriebe (10), das eine erste, eine zweite und eine dritte Planetenstufe (20, 30, 40) umfasst. In jeder der Planetenstufen (20, 30, 40) sind als Stufenkomponenten (11) ein Hohlrad (12), einen Planetenträger (14) und ein Sonnenrad (16) angeordnet. Erfindungsgemäß ist nur eine Stufenkomponente (11) stationär ausgebildet ist. Die Erfindung betrifft auch eine Windkraftanlage (70), die über einen Antriebsstrang (60) verfügt, in der ein entsprechendes Koppelgetriebe (10) eingesetzt wird. Ferner betrifft die Erfindung eine Industrie-Applikation (80), in der ein entsprechendes Koppelgetriebe (10) verwendet wird.

## Beschreibung

Die Erfindung betrifft ein Koppelgetriebe, das für den Einsatz in einer Windkraftanlage oder einer Industrie-Applikation ausgebildet ist. Die Erfindung betrifft auch einen Antriebsstrang einer Windkraftanlage, der über ein entsprechendes Koppelgetriebe verfügt. Gleichermaßen betrifft die Erfindung eine Windkraftanlage, die mit einem derartigen Antriebsstrang ausgestattet ist. Ferner betrifft die Erfindung eine Industrie-Applikation, die als Getriebe über ein entsprechendes Koppelgetriebe verfügt.

Aus DE 199 63 597 A1 ist ein Getriebe für Windkraftanlagen bekannt, das über insgesamt drei Planetenstufen verfügt. Eine in eine erste Stufe eingeleitete Antriebsleistung wird verzweigt in eine zweite und dritte Stufe ausgeleitet. Dazu ist in der ersten Stufe das Hohlrad stationär ausgebildet und in der zweiten Stufe der Planetenträger.

In einer Vielzahl an Teilgebieten des Anlagenbaus und in der Energieerzeugung besteht die Zielsetzung, höhere Antriebsleistungen einzusetzen um dadurch leistungsfähigere Anlagen bzw. Kraftwerke zu verwirklichen. Daraus ergibt sich ein Bedarf an Getrieben, die bei erhöhter Eingangsleistung ein erhöhtes Übersetzungs- bzw. Untersetzungsverhältnis bieten. Gleichzeitig wird eine kompakte und kosteneffiziente Bauweise gewünscht. Beispielsweise wird bei Windkraftanlagen angestrebt, bei gleichbleibender Gondelgröße höhere Antriebsleistungen in ein Getriebe einzuleiten. Ebenso wird ein hohes Maß an Zuverlässigkeit und Lebensdauer für das Getriebe angestrebt. Der Erfindung liegt die Aufgabe zugrunde, ein Getriebe bereitzustellen, das in zumindest einem dieser Punkte eine Verbesserung bietet.

Die Aufgabenstellung wird durch das erfindungsgemäße Koppelgetriebe gelöst. Das Koppelgetriebe weist zumindest eine erste, eine zweite und eine dritte Planetenstufe auf, die jeweils miteinander verbunden sind. Jede der Planetenstufen weist eine Mehrzahl an Stufenkomponenten auf, durch die die Übersetzungs- bzw. Untersetzungsfunktion des Koppelgetriebes gewährleistet wird. Jede der Planetenstufen umfasst als Stufenkomponenten zumindest ein Hohlrad, einen Planetenträger und ein Sonnenrad. Unter Stufenkomponenten sind hierbei die Bauteile des Koppelgetriebes zu verstehen, die dazu ausgebildet, eine in das Koppelgetriebe eingeleitete Antriebsleistung zumindest teilweise von einer Eingangswelle zu einer Ausgangswelle zu übertragen. Im Koppelgetriebe ist erfindungsgemäß nur eine einzige der Stufenkomponenten stationär ausgebildet, also beispielsweise mit einem stillstehenden Gehäuse, fest verbunden. Infolgedessen ergeben sich Beanspruchungen, die zwischen den verbleibenden Stufenkomponenten vorliegen, vorrangig aus der in das Koppelgetriebe eingeleiteten Antriebsleistung. Dies erlaubt eine sich selbst einstellende verbesserte Verteilung, und damit stufenkomponentenweise Reduzierung, der vorliegenden mechanischen Beanspruchungen. Darüber hinaus erlaubt die beanspruchte Lösung es, bezogen auf einen Betrieb in einem Auslegungsbetriebspunkt, bei den Hohlrädern eine reduzierte Drehzahl zu erzielen. Die Drehzahl der Hohlräder ist niedriger als die der Hohlräder beispielsweise in DE 199 63 597 A1. Hohlräder stellen üblicherweise die schwersten Stufenkomponenten dar und beeinflussen das Schwingungsverhalten des Koppelgetriebes. Je niedriger die Drehzahlen von Hohlrädern in einem Koppelgetriebe sind, umso niedriger sind im Betrieb auch die Schwingungsamplituden und damit die mechanischen Beanspruchungen der Stufenkomponenten. Dies dient ferner der Geräuschminderung.

Eine derartige verbesserte Verteilung der mechanischen Beanspruchungen in den Stufenkomponenten erlaubt es, diese entsprechend kleiner und/oder filigraner zu konstruieren, wodurch eine reduzierte Größe für das Koppelgetriebe erzielt wird. Insbesondere wird der Durchmesser des Koppelgetriebes reduziert. Der Durchmesser ist dabei bezogen auf das größte Hohlrad des Koppelgetriebes, insbesondere den Außendurchmesser des größten Hohlrads. Ferner wird durch die verbesserte Verteilung der mechanischen Beanspruchungen in den Stufenkomponenten eine gesteigerte Lebensdauer und Zuverlässigkeit des Koppelgetriebes erreicht.

Des Weiteren können im beanspruchten Koppelgetriebe in zumindest einem Planetenträger der drei Planetenstufen mindestens fünf Planetenräder aufgenommen sein, die mit dem entsprechenden Hohlrad kämmen. Infolgedessen weist eine Planetenstufe mit fünf oder mehr Planetenrädern eine reduzierte Standübersetzung auf. Das beanspruchte Koppelgetriebe erfordert gegenüber dem Stand der Technik reduzierte Standübersetzungen um ein angestrebtes Gesamtübersetzungsverhältnis zu erzielen. Eine entsprechend gewählte Standübersetzung erlaubt auch ein Einstellen einer Aufteilung der eingeleiteten Antriebsleistung in die entsprechende Planetenstufe. Die Verwendung von fünf oder mehr Planetenrädern in einer Planetenstufe bietet auch eine verbesserte Verteilung der mechanischen Beanspruchungen im Betrieb des Koppelgetriebes, und somit einen verringerten Verschleiß.

In einer Ausführungsform des beanspruchten Koppelgetriebes kann der Planetenträger der ersten oder der zweiten Planetenstufe stationär ausgebildet sein. Beispielsweise liegt in einer Windkraftanlage an der ersten Planetenstufe das höchste Drehmoment vor. Dadurch, dass der Planetenträger der ersten Planetenstufe stationär ausgebildet ist, liegt dort zwischen der Eingangswelle und den Stufenkomponenten der ersten Planetenstufe jeweils ein minimales Spiel vor. Dies erlaubt eine präzise Einleitung der Antriebsleistung, und damit eine zuverlässige Lagerung der Stufenkomponenten der zweiten und dritten Planetenstufe. Darüber hinaus wird dabei eine verkürzte gegenseitige Anbindung der Planetenstufen erreicht. Insbesondere können beispielsweise aus existierenden Planetengetrieben bekannte Wellenkonstruktionen eingesetzt werden. Eine solche Gleichteilverwendung erlaubt eine einfache und wirtschaftliche Herstellung des beanspruchten Koppelgetriebes.

Alternativ erlaubt ein stationär ausgebildeter Planetenträger der zweiten Planetenstufe, ein Spiel gegenüber den Stufenkomponenten der ersten und dritten Planetenstufe zu reduzieren. Dadurch wird eine reduzierte Geräuschentwicklung durch das Koppelgetriebe erzielt. Ferner erlaubt ein stationärer Planetenträger in der zweiten Planetenstufe es, eine verkürzte Anbindung zwischen der ersten und zweiten Planetenstufe herzustellen. Eine derartig verkürzte Anbindung kann beispielsweise als starr miteinander verbundene Hohlräder der ersten und zweiten Planetenstufe ausgebildet sein.

Des Weiteren können die Hohlräder von zumindest zwei Planetenstufen drehstarr miteinander verbunden sein. Dies ist beispielsweise dadurch erzielbar, dass die Hohlräder einstückig ausgebildet sind oder durch Verbindungselemente miteinander verbunden. Geeignete Verbindungselemente können hierbei beispielsweise Flanschverbindungen, Stabverbindungen oder Zylinderkörper sein. Mehrere drehstarr miteinander verbundene Hohlräder erlauben es, die Anzahl an Stufenkomponenten unterschiedlicher Drehzahl zu verringern, und so die Laufruhe des Koppelgetriebes zu steigern. Darüber hinaus führen drehstarr miteinander verbundene Hohlräder die darin aufgenommenen Stufenkomponenten, also Planetenträger, Planetenräder und/oder Sonnenräder in radialer Richtung. Dadurch wird eine Verminderung der Geräuschentwicklung im Betrieb erzielt. Ferner erlaubt eine starre Verbindung mehrerer Hohlräder, insbesondere eine starre Verbindung von drei Hohlrädern, einen Verzicht auf ein starres Gehäuse. Das beanspruchte Koppelgetriebe kann damit gehäusefrei ausgebildet sein, was eine noch kompaktere Bauweise erlaubt, die insbesondere für Off-shore-Windkraftanlagen vorteilhaft ist.

In einer weiteren Ausführungsform des beanspruchten Koppelgetriebes ist eine erste Leistungswelle des Koppelgetriebes starr mit zwei Stufenkomponenten der ersten und zweiten Planetenstufe verbunden. Die erste Leistungswelle stellt dabei die Welle dar, über die die durch das Koppelgetriebe geleitete Antriebsleistung auf der Seite der ersten Planetenstufe zugeführt wird oder abgeführt wird. Durch eine drehmomentübertragende Verbindung zwischen der ersten Leistungswelle und der ersten und zweiten Planetenstufe erfolgt eine Verzweigung, also eine Aufteilung oder Zusammenführung, der über die erste Leistungswelle transportierte Antriebsleistung. Hierdurch wird an der ersten und zweiten Planetenstufe das Konzept eines Differentialgetriebes verwirklicht. Ein Differentialgetriebe erlaubt es, hohe Antriebsleistungen bei geringer Baugröße zuverlässig zu transportieren. Insbesondere wird vermieden, dass hohe Drehmomente weit durch das Koppelgetriebe zu transportieren sind, was wiederum eine vergrößerte Dimensionierung der entsprechenden Stufenkomponenten erfordern würde. Die oben skizzierten Vorzüge der beanspruchten Lösung werden durch eine derartige erste Leistungswelle in besonderem Maße erzielt.

Ferner kann im beanspruchten Koppelgetriebe ein Sonnenrad der zweiten Planetenstufe drehstarr mit dem Planetenträger oder dem Hohlrad der dritten Planetenstufe verbunden sein. Dies erlaubt in vorteilhafter Weise in der dritten Planetenstufe eine Zusammenführung einer zwischen der ersten und zweiten Planetenstufe aufgeteilten. Im Zusammenspiel damit, dass die erste Planetenstufe korrespondierend mit dem Hohlrad oder dem Planetenträger der dritten Planetenstufe verbunden ist, kann die zusammenführte Antriebsleistung auf das Sonnenrad der dritten Planetenstufe übertragen werden. Dadurch werden ein erhöhtes Gesamtübersetzungsverhältnis des Koppelgetriebes und eine Zusammenführung der Abtriebsleistung auf eine einzige Welle erzielt. Alternativ oder ergänzend kann bei gleichem Gesamtübersetzungsverhältnis und gleichbleibender Antriebsleistung die Baugröße des Koppelgetriebes reduziert werden. Insbesondere ist eine drehstarre Verbindung zwischen dem Sonnenrad der zweiten Planetenstufe und dem Planetenträger der dritten Planetenstufe radial kompakt und in einfacher Weise kosteneffizient herstellbar. Insbesondere ist die drehstarre Verbindung zwischen dem Sonnenrad der zweiten Planetenstufe und dem Planetenträger der dritten Planetenstufe mittels erprobter Konstruktionen erzielbar, für ein breites Erfahrungsspektrum vorliegt. Dies verwirklicht zusätzlich das Prinzip der Gleichteileverwendung, was die Herstellung des beanspruchten Koppelgetriebes weiter vereinfacht. In einer weiteren Ausführungsform des beanspruchten Koppelgetriebes kann die erste Planetenstufe ein niedrigeres Übersetzungsverhältnis aufweisen als die zweite und dritte Planetenstufe. Ferner kann das Standübersetzungsverhältnis der dritten Planetenstufe höher sein als das Standübersetzungsverhältnis der zweiten Planetenstufe. Alternativ können die Standübersetzungsverhältnisse der zweiten und dritten Planetenstufe im Wesentlichen gleich hoch sein.

In einer weiteren Ausführungsform des beanspruchten Koppelgetriebes weist dieses ein Gesamtübersetzungsverhältnis von 10 bis 250, vorzugsweise von 35-220, besonders bevorzugt von 50-200 auf. Derartige Übersetzungsverhältnisse erlauben es beispielsweise, eine langsame Drehung eines Rotors an einer Windkraftanlage in eine schnelle Drehung einer Ausgangswelle umzusetzen, die einen Generator antreibt. Je höher die Drehzahl ist, mit der ein Generator angetrieben wird, umso niedriger ist die Polpaarzahl, die zur Erzeugung von Wechselstrom mit ausreichender Frequenz nötig ist. Eine reduzierte Polpaarzahl wiederum erlaubt es, einen Generator einer Windkraftanlage einfacher und kosteneffizienter herzustellen.

Darüber hinaus kann das Sonnenrad der dritten Planetenstufe mit einer zweiten Leistungswelle verbunden sein. Die zweite Leistungswelle stellt das funktionell spiegelbildliche Pendant zur ersten Leistungswelle dar. Bei Verwendung des beanspruchten Koppelgetriebes als Übersetzungsgetriebe stellt die zweite Leistungswelle die Ausgangswelle dar, beispielweise beim Einsatz in einer Windkraftanlage. Entsprechend umgekehrt dient die zweite Leistungswelle als Eingangswelle, wenn das Koppelgetriebe beispielsweise in einer Industrieapplikation eingesetzt wird. Bei einer zweiten Leistungswelle, die mit dem Sonnenrad der dritten Planetenstufe verbunden ist, ist insgesamt ein erhöhtes Gesamtübersetzungsverhältnis erzielbar, da das Sonnenrad als masseärmste Stufenkomponente besonders für den Betrieb mit erhöhten Drehzahlen geeignet ist.

In einer Ausführungsform des beanspruchten Koppelgetriebes ist die erste Leistungswelle somit als Eingangswelle, und die zweite Leistungswelle als Ausgangswelle ausgebildet. Dies entspricht im Wesentlichen einem Betrieb des Koppelgetriebes in einer Anwendung, in der, wie bei einer Windkraftanlage, eine Eingangsdrehzahl zu erhöhen ist. Alternativ kann die erste Leistungswelle als Ausgangswelle und die zweite Leistungswelle als Eingangswelle des Koppelgetriebes ausgebildet sein. Dies entspricht einem Einsatz des Koppelgetriebes, in der eine Eingangsdrehzahl zu reduzieren ist. Das beanspruchte Koppelgetriebe erlaubt es, die oben skizzierten technischen Vorteile in einer Vielzahl an Anwendungsgebieten zu implementieren. Somit ist die beanspruchte Lösung vielseitig einsetzbar.

In einer weiteren Ausführungsform des beanspruchten Koppelgetriebes kann die eingehende Antriebsleistung zwischen der ersten und zweiten Planetenstufe in zwei erste Teilleistungen aufgeteilt werden. Das Koppelgetriebe ist vorzugsweise dazu ausgebildet, dass die ersten Teilleistungen im Wesentlichen 30% bis 70% der eingehenden Antriebsleistung betragen. Besonders bevorzugt ist es, wenn die ersten Teilleistungen gleich groß sind. Eine derart eingestellte Verteilung der eingehenden Antriebsleistung auf die erste und zweite Planetenstufe erlaubt es, diese kompakt auszubilden.

Des Weiteren kann das Koppelgetriebe an der ersten und/oder dritten Planetenstufe mit einer Stirnradstufe versehen sein. Dadurch ist das von den drei Planetenstufen erzielbare Gesamtübersetzungsverhältnis weiter steigerbar. Infolge der kompakten Bauweise der Planetenstufen kann im beanspruchten Koppelgetriebe somit in platzsparender Weise eine Stirnradstufe hinzugefügt werden.

Die zugrundeliegende Aufgabenstellung wird auch durch einen erfindungsgemäßen Antriebsstrang gelöst. Der Antriebsstrang gehört zu einer Windkraftanlage und weist eine Rotorwelle auf, die in der Windkraftanlage durch einen Rotor antreibbar ist. Die Rotorwelle ist drehmomentübertragend mit einem Getriebe verbunden und dient als Eingangswelle des Getriebes. Das Getriebe wiederum ist drehmomentübertragend mit einem Generator verbunden und ist dazu ausgebildet, eine von der Rotorwelle transportierte Antriebsleistung mit einer erhöhten Drehzahl auf den Generator zur Elektrizitätsgewinnung zu übertragen. Erfindungsgemäß ist das Getriebe als ein Koppelgetriebe gemäß einer der oben beschriebenen Ausführungsformen ausgebildet. Ein solches Koppelgetriebe erlaubt es, hohe Antriebsleistungen an den Generator zu übertragen und ist gleichzeitig kosteneffizient herstellbar und kompakt.

Gleichermaßen wird die Aufgabenstellung durch die erfindungsgemäße Windkraftanlage gelöst, die eine Gondel umfasst, an der drehbar ein Rotor angebracht ist. Der Rotor ist drehmomentübertragen mit einer Rotorwelle verbunden. Die Rotorwelle gehört dabei zu einem Antriebsstrang, der gemäß einer der oben beschriebenen Ausführungsformen ausgebildet ist. Durch einen entsprechenden Antriebsstrang wird die Leistungsfähigkeit der Windkraftanlage gesteigert.

[Anspruch 14] Die skizzierte Aufgabenstellung wird auch durch eine erfindungsgemäße Industrie-Applikation gelöst. Die Industrie-Applikation umfasst ein Antriebsmittel, beispielsweise einen Elektromotor, einen Verbrennungsmotor oder einen Hydraulikmotor, über das eine Antriebsleistung zur Verfügung gestellt wird. Das Antriebsmittel ist mit einem Getriebe verbunden, das dazu ausgebildet ist, die Antriebsleistung mit veränderter Drehzahl an eine mechanische Anwendung zu übertragen. Dadurch wird ein Antrieb der mechanischen Anwendung durch das Antriebsmittel gewährleistet. Das Getriebe ist dabei als Koppelgetriebe gemäß einer der oben beschriebenen Ausführungsformen ausgebildet. Die mechanische Anwendung kann hierbei beispielsweise eine Mühle, eine Vertikalmühle, eine Zuckermühle, eine Zementmühle, ein Gesteinsbrecher, ein Förderband, eine Pumpe, eine Hubvorrichtung, eine Rollenpressem eine Rohrmühle, ein Drehrohrofen, ein Drehwerk, ein Rührwerk, eine Müll- oder eine Schrottpresse sein.

Die Erfindung wird im Folgenden anhand einzelner Ausführungsformen beschrieben. Die Merkmale der einzelnen Ausführungsformen sind dabei untereinander kombinierbar. Die Figuren sind insoweit in gegenseitiger Ergänzung zu lesen, dass gleiche Bezugszeichen in den Figuren auch die gleiche technische Bedeutung haben. Es zeigen im Einzelnen:
- FIG 1: eine schematische Darstellung einer ersten Ausführungsform des beanspruchten Koppelgetriebes;
- FIG 2: eine schematische Darstellung einer zweiten Ausführungsform des beanspruchten Koppelgetriebes;
- FIG 3: eine schematische Darstellung einer dritten Ausführungsform des beanspruchten Koppelgetriebes;
- FIG 4: eine schematische Darstellung einer vierten Ausführungsform des beanspruchten Koppelgetriebes;
- FIG 5: eine Schrägansicht einer Ausführungsform der beanspruchten Windkraftanlage;
- FIG 6: einen schematischen Aufbau einer Ausführungsform der beanspruchten Industrie-Applikation.

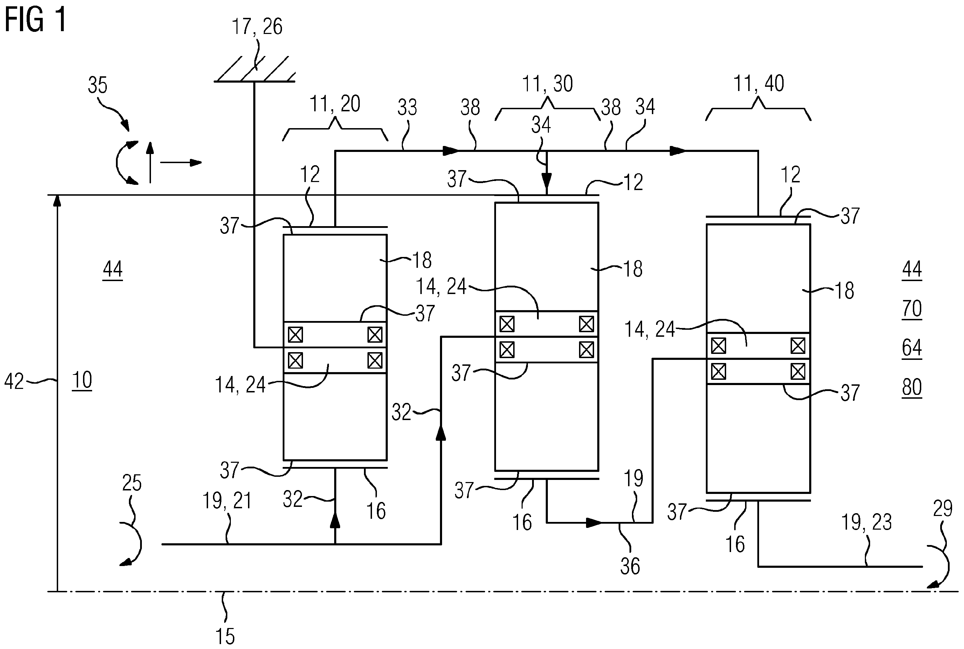

FIG 1 zeigt schematisch den Aufbau einer ersten Ausführungsform des beanspruchten Koppelgetriebes 10, das eine erste, eine zweite und eine dritte Planetenstufe 20, 30, 40 umfasst. Jede der Planetenstufen 20, 30, 40 weist Stufenkomponenten 11 auf, die miteinander in Eingriff stehen und so eine eingehende Antriebsleistung 25 weitertransportieren. Die Stufenkomponenten 11 umfassen in jeder der Planetenstufen 20, 30, 40 ein Hohlrad 12, einen Planetenträger 14, ein Sonnenrad 16 und ein Planetenrad 18. Die Planetenräder 18 sind jeweils auf Planetenradachsen 24 drehbar aufgenommen, die fest mit einem Planetenträger 14 verbunden sind. Die Planetenträger 14 der zweiten und dritten Planetenstufe 30, 40 sind ferner um eine Hauptdrehachse 15 des Koppelgetriebes 10 drehbar. Der Planetenträger 14 der ersten Planetenstufe 20 ist stationär ausgebildet und somit gegenüber der Hauptdrehachse 15 starr. Die stationäre Anordnung des Planetenträgers 14 der ersten Planetenstufe 20 ist dadurch gewährleistet, dass der Planetenträger 14 über eine stationäre Anbindung 26 mit einem Gehäuse 17 des Koppelgetriebes 10 verbunden ist. Durch die eingehende Antriebsleistung 25 und das Eigengewicht der entsprechenden Stufenkomponenten 11 werden im Bereich der stationären Anbindung 26 Lagerreaktionen 35 erzeugt, die in FIG 1 schematisch als Längskräfte, Querkräfte und Drehmomente abgebildet sind. Darüber hinaus vorhandene mechanische Beanspruchungen 37 zwischen den Stufenkomponenten 11 sind von der vorliegenden eingehenden Antriebsleistung 25 bestimmt.

Die eingehende Antriebsleistung 25 wird dem Koppelgetriebe 10 über eine erste Leistungswelle 21 zugeführt, die als eine Sonnenwelle 19 ausgebildet ist. Die erste Leistungswelle 21 ist mit dem Sonnenrad 16 der ersten Planetenstufe 20 und dem Planetenträger 14 der zweiten Planetenstufe 30 verbunden. Die eingehende Antriebsleistung 25 wird dadurch in erste Teilleistungen 32 verzweigt. Ferner wird über das Hohlrad 12 der ersten Planetenstufe 20 eine zweite Teilleistung 33 abgegeben. Die Hohlräder 12 der ersten, zweiten und dritten Planetenstufe 20, 30, 40 sind über Verbindungselemente 38 drehstarr miteinander verbunden, so dass die zweite Teilleistung 33 in dritte Teilleistungen 34 verzweigt wird. Eine der dritten Teilleistungen 34 wird zusammen mit einer ersten Teilleistung 32 der zweiten Planetenstufe 30 zugeführt. Über das Sonnenrad 16 der zweiten Planetenstufe 30 wird eine vierte Teilleistung 36 abgegeben und dem Planetenträger 14 der dritten Planetenstufe 40 zugeführt. Dazu ist eine Sonnenwelle 19 mit dem Sonnenrad 16 der zweiten Planetenstufe 30 und dem Planetenträger 14 der dritten Planetenstufe 40 verbunden. Ebenso wird der dritten Planetenstufe 40 über dessen Hohlrad 12 eine dritte Teilleistung 34 zugeführt. Des Weiteren werden die wieder zusammengeführten Teilleistungen 32, 33, 34, 36 über das Sonnenrad 16 der dritten Planetenstufe 40 als Abtriebsleistung 29 auf eine zweite Leistungswelle 23 übertragen, die wiederum als Sonnenwelle 19 ausgebildet ist. Die Abtriebsleistung 29 entspricht unter Berücksichtigung von Reibungsverlusten im Koppelgetriebe der eingehenden Antriebsleistung 25 unter Veränderung von Drehzahl und Drehmoment.

Gemäß FIG 1 erfolgt von der ersten auf die zweite Leistungswelle 21, 23 eine Erhöhung der Drehzahl und eine Reduzierung des Drehmoments. Das Koppelgetriebe 10 ist deshalb beispielsweise in Windkraftanlagen 70 einsetzbar um mit der zweiten Leistungswelle 23 einen nicht näher dargestellten Generator 64 zu betreiben. Bei Einleitung der eingehenden Antriebsleistung 25 in die zweite Leistungswelle 23 wiederum ist das Koppelgetriebe 10 nach FIG 1 auch als Untersetzungsgetriebe in einer nicht näher dargestellten Industrie-Applikation 80 einsetzbar.

Der Aufbau gemäß FIG 1 erlaubt es, die mechanischen Beanspruchungen 37 zwischen den Stufenkomponenten 11 in gleichmäßiger Weise zu verteilen, so dass in den Stufenkomponenten 11 eine erhöhte Materialausnutzung erzielbar ist. Dies wiederum ermöglicht es, das Koppelgetriebe 10 kompakt zu bauen. Insgesamt bietet das Koppelgetriebe 10 gegenüber bekannten Koppelgetrieben einen, bezogen auf das größte Hohlrad 12, reduzierten Durchmesser 42. Der Durchmesser 42 ist hierbei gegenüber bekannten Planetengetrieben, die eine gleich hohe Antriebsleistung aufnehmen, um ca. 25% reduziert.

Darüber hinaus weisen die miteinander verbundenen Hohlräder 12 der ersten, zweiten und dritten Planetenstufe 20, 30, 40 zusammen eine erhöhte Masse auf. Die gemeinsam drehenden Hohlräder 12 bieten damit im Betrieb eine gute mechanische Dämpfung, wodurch die Geräuschentwicklung im Koppelgetriebe 10 reduziert wird. Zu einer weiteren Beeinflussung einer Drehzahl an der ersten und/oder zweiten Leistungswelle 21, 23, können diese jeweils mit einer nicht näher dargestellten Stirnradstufe 44 gekoppelt werden.

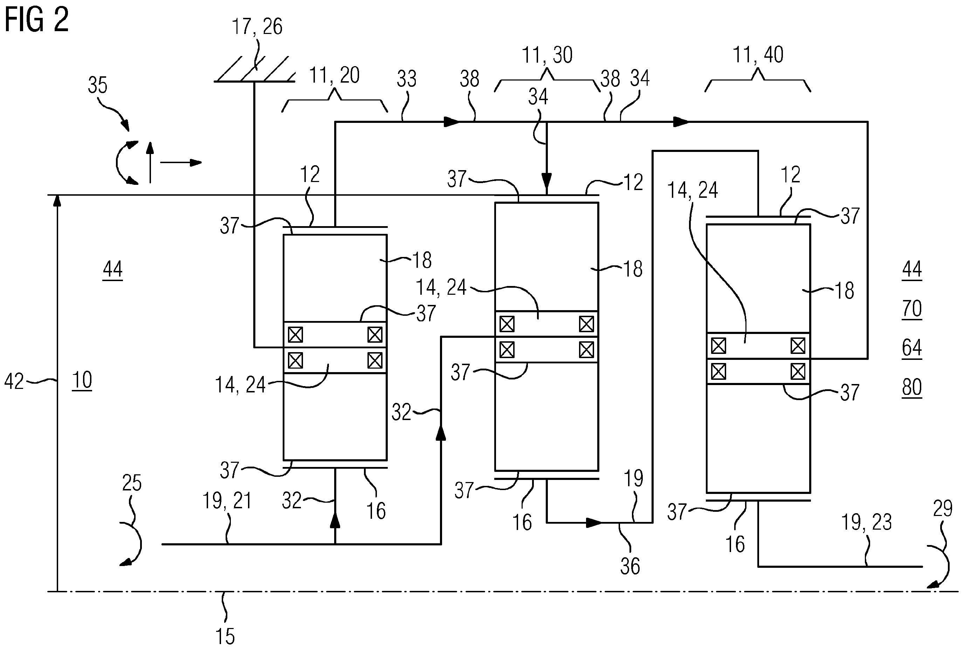

In FIG 2 ist schematisch der Aufbau einer zweiten Ausführungsform des beanspruchten Koppelgetriebes 10 dargestellt. Der Aufbau der ersten und zweiten Planetenstufe 20, 30 korrespondiert in FIG 2 im Wesentlichen mit dem Aufbau gemäß FIG 1. Dabei haben Merkmale mit gleichen Bezugszeichen, insbesondere Stufenkomponenten 11 mit gleichen Bezugszeichen, die gleiche technische Bedeutung. Die eingehende Antriebsleistung 25 wird an der Sonnenwelle 19, die mit dem Sonnenrad 16 der ersten Planetenstufe 20 verbunden ist, in erste Teilleistungen 32 verzweigt, die in die erste und zweite Planetenstufe 20, 30 eingeleitet werden. Der Planetenträger 14 der ersten Planetenstufe 20 ist über eine stationäre Anbindung 26 mit dem Gehäuse 17 des Koppelgetriebes 10 verbunden. Die Hohlräder 12 der ersten und zweiten Planetenstufe 20, 30 sind drehstarr miteinander verbunden, so dass diese sich gemeinsam drehen. Die drehstarre Verbindung wird über ein entsprechendes Verbindungselement 38 gewährleistet. Ferner sind die Hohlräder 12 der ersten und zweiten Planetenstufe 20, 30 mit dem Planetenträger 14 der dritten Planetenstufe 40 verbunden. Eine zweite Teilleistung 33, die aus dem Hohlrad 12 der ersten Planetenstufe 20 ausgeleitet wird, wird dadurch als dritte Teilleistungen 34 verzweigt in das Hohlrad 12 der zweiten Planetenstufe 30 und den Planetenträger 14 der dritten Planetenstufe 40 eingeleitet. Ferner werden in der zweiten Planetenstufe 30 eine erste Teilleistung 32 und eine dritte Teilleistung 34 zusammengeführt und über das Sonnenrad 16 der zweiten Planetenstufe 30 als vierte Teilleistung 36 an die dritte Planetenstufe 40 weitertransportiert. Dazu ist die Sonnenwelle 19, die mit dem Sonnenrad 16 der zweiten Planetenstufe 30 mit dem Hohlrad 12 der dritten Planetenstufe 40 verbunden. Die vierte Teilleistung 36 und eine dritte Teilleistung 34 werden damit über das Hohlrad 12 und den Planetenträger 14 in die dritte Planetenstufe 40 eingeleitet und über deren Sonnenrad 16 an eine zweite Leistungswelle 23 zusammengeführt abgegeben. Die zweite Leistungswelle 23 ist dazu als Sonnenwelle 19 ausgebildet, die mit dem Sonnenrad 16 der dritten Planetenstufe 40 verbunden ist. Die eingehende Antriebsleistung 25 wird im Koppelgetriebe 10 unter Berücksichtigung von Reibungsverlusten als Ausgangsleistung 29 abgegeben. Beim Aufbau nach FIG 2 weist die zweite Leistungswelle 23 eine höhere Drehzahl auf als die erste Leistungswelle 21. Die Ausführungsform gemäß FIG 2 bietet ein erhöhtes Gesamtübersetzungsverhältnis und erlaubt auch eine kompakte Bauweise. Der Durchmesser 42 des größten Hohlrads 12, das in der zweiten Planetenstufe 30 angeordnet ist, ist gegenüber den aus dem Stand der Technik bekannten Lösungen reduziert. Ferner ist die Ausführungsform in FIG 2 analog zur Ausführungsform in FIG 1 zum Antreiben eines Generators 64 in einer Windkraftanlage 70 oder in einer Industrie-Applikation 80 einsetzbar. Zu einer weiteren Beeinflussung einer Drehzahl an der ersten und/oder zweiten Leistungswelle 21, 23, können diese jeweils mit einer nicht näher dargestellten Stirnradstufe 44 gekoppelt werden.

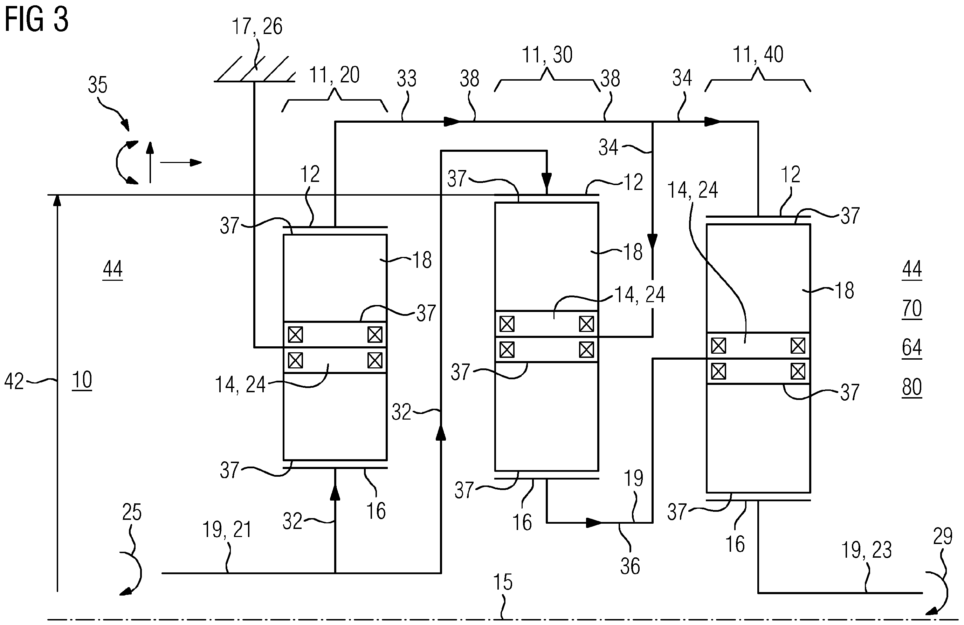

Der in FIG 3 dargestellte Aufbau einer dritten Ausführungsform des beanspruchten Koppelgetriebes 10 korrespondiert im Wesentlichen mit dem Aufbau gemäß FIG 1 und FIG 2. Insbesondere sind Stufenkomponenten 11 mit gleichen Bezugszeichen wie in FIG 1 und FIG 2 analog aufzufassen. Bei der Ausführungsform nach FIG 3 wird die eingehende Antriebsleistung 25 über eine Sonnenwelle 19, die als erste Leistungswelle 21 dient, verzweigt an das Sonnenrad 16 der ersten Planetenstufe 20 und das Hohlrad 12 der zweiten Planetenstufe 30 weitergeleitet. Somit wird jeweils eine erste Teilleistung 32 an das Sonnenrad 12 in der ersten Planetenstufe 20 und das Hohlrad 12 der zweiten Planetenstufe 30 geführt. Über Hohlrad 12 der ersten Planetenstufe 20 wird eine zweite Teilleistung 33 abgeführt, die wiederum in dritte Teilleistungen 34 verzweigt wird. Zum Verzweigen der zweiten Teilleistung 32 ist das Hohlrad 12 der ersten Planetenstufe 20 mit dem Hohlrad 12 der dritten Planetenstufe 40 und dem Planetenträger 14 der zweiten Planetenstufe 30 verbunden. In der zweiten Planetenstufe 30 werden eine erste und eine dritte Teilleistung 32, 34 zusammengeführt und als vierte Teilleistung 36 über deren Sonnenrad 16 an eine Sonnenwelle 19 abgegeben. Die Sonnenwelle 19, die mit dem Sonnenrad 16 der zweiten Planetenstufe 30 zusammenwirkt, ist mit dem Planetenträger 14 der dritten Planetenstufe 40 verbunden. In der dritten Planetenstufe 40 werden eine dritte Teilleistung 34 über deren Hohlrad 12 und die vierte Teilleistung 36 über deren Planetenträger 14 zusammengeführt. Die so zusammengeführten Teilleistungen 34, 36 werden als Ausgangsleistung über das Sonnenrad 16 der dritten Planetenstufe 40 an eine Sonnenwelle 19 abgegeben, die als zweite Leistungswelle 23 dient. Die Ausgangsleistung 29 entspricht, unter Berücksichtigung von Reibungsverlusten, der eingehenden Antriebsleistung 25. Die Ausgangsleistung 29 weist dabei eine höhere Drehzahl auf als die eingehende Antriebsleistung 25.

Die Hohlräder 12 der ersten und dritten Planetenstufe 20, 40 sind drehstarr miteinander verbunden. Das Verbindungselement 38 zwischen den Hohlrädern 12 der ersten und dritten Planetenstufe 20, 40 hüllt damit die zweite Planetenstufe 30 ein, und umschließt sie im Wesentlichen. Die so verbundenen Hohlräder 12 wirken aufgrund ihrer Trägheit damit im laufenden Betrieb des Koppelgetriebes 10 stabilisierend und gewährleisten ein hohes Maß an Laufruhe. Gleichzeitig wird mit der in FIG 3 dargestellten Kopplung der Planetenstufen 20, 30, 40 untereinander ein erhöhtes Gesamtübersetzungsverhältnis erzielt. Gleichermaßen bietet die in FIG 3 dargestellte Ausführungsform bei gleicher eingehender Antriebsleistung 25 gegenüber den bekannten Lösungen einen reduzierten Durchmesser 42, der auf das größte Hohlrad 12 bezogen ist. Ferner ist die Ausführungsform in FIG 3 analog zu den Ausführungsformen in FIG 1 und FIG 2 zum Antreiben eines Generators 64 in einer Windkraftanlage 70 oder in einer Industrie-Applikation 80 einsetzbar. Zu einer weiteren Beeinflussung einer Drehzahl an der ersten und/oder zweiten Leistungswelle 21, 23, können diese jeweils mit einer nicht näher dargestellten Stirnradstufe 44 gekoppelt werden.

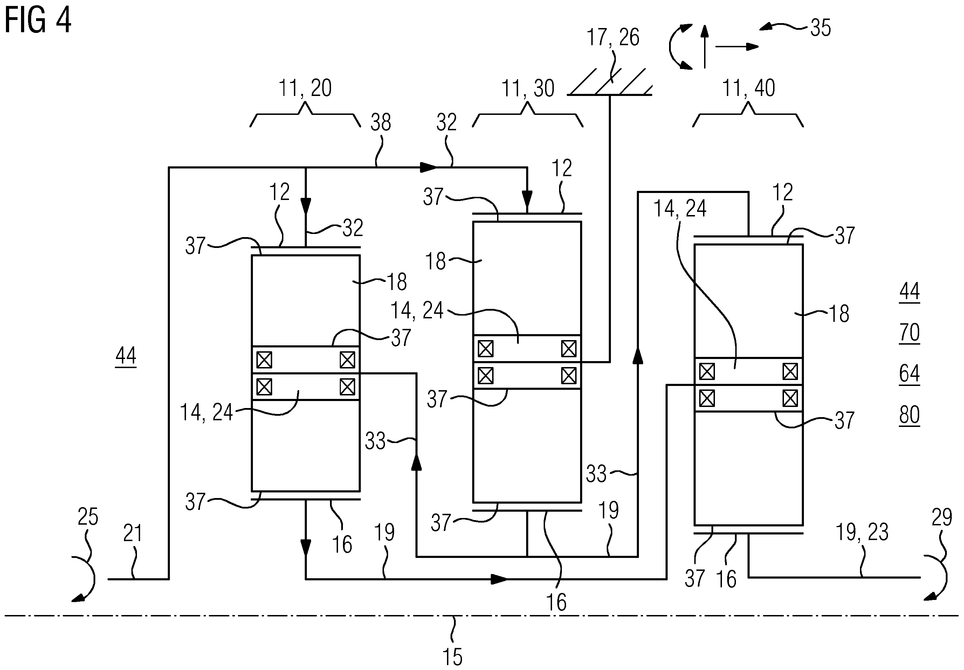

Die in FIG 4 abgebildete Ausführungsform des beanspruchten Koppelgetriebes 10 umfasst eine erste, eine zweite und eine dritte Planetenstufe 20, 30, 40, die jeweils eine Mehrzahl an Stufenkomponenten 11 aufweisen. In Zusammenschau mit den FIG 1-3 haben in FIG 4 gleiche Bezugszeichen die gleichen technischen Bedeutungen. In der dargestellten Ausführungsform des Koppelgetriebes 10 ist der Planetenträger 14 der zweiten Planetenstufe 30 stationär ausgebildet. Dazu ist der Planetenträger 14 der zweiten Planetenstufe 30 durch eine stationäre Anbindung 26 mit dem Gehäuse 17 des Koppelgetriebes 10 verbunden. An der stationären Anbindung 26 werden durch die eingehende Antriebsleistung 25 und das Eigengewicht der entsprechenden Stufenkomponenten 11 Lagerreaktionen 35 hervorgerufen, die in FIG 4 schematisch als Längskräfte, Querkräfte und Drehmomente dargestellt sind. Die erste und dritte Planetenstufe 20, 40 sind damit im Wesentlichen an der zweiten Planetenstufe 30 gelagert. Dadurch werden mechanische Beanspruchungen 37 zwischen den weiteren Stufenkomponenten 11 reduziert.

Ferner wird eine eingehende Antriebsleistung 25 über eine erste Leistungswelle 21 in das Koppelgetriebe 10 eingeleitet. Dazu ist die erste Leistungswelle 21 mit den Hohlrädern 12 der ersten und zweiten Planetenstufe 20, 30 verbunden. Die Hohlräder 12 der ersten und zweiten Planetenstufe 20, 30 sind dazu über ein Verbindungselement 38 miteinander gekoppelt. Dadurch wird die eingehende Antriebsleistung 25 auf erste Teilleistungen 32 verzweigt, die separat der ersten und zweiten Planetenstufe 20, 30 zugeführt werden. Das Sonnenrad 16 der zweiten Planetenstufe 30 ist über eine Sonnenwelle 19 dem Planetenträger 14 der ersten Planetenstufe 20 und dem Hohlrad 12 der dritten Planetenstufe 40 verbunden. Auch hierdurch werden verzweigte zweite Teilleistungen 33 an die erste und dritte Planetenstufe 20, 40 weitergeleitet. In der ersten Planetenstufe 20 werden infolgedessen eine erste Teilleistung 32 und eine zweite Teilleistung 33 zusammengeführt und als dritte Teilleistung 34 aus der ersten Planetenstufe 20 ausgeleitet. Die dritte Teilleistung 34 wird dabei vom Sonnenrad 16 der ersten Planetenstufe 20 über eine Sonnenwelle 19 in den Planetenträger 14 der dritten Planetenstufe 40 transportiert. Somit werden in der dritten Planetenstufe 40 die dritte Teilleistung 34 von der ersten Planetenstufe 20 und eine zweite Teilleistung 33 der zweiten Planetenstufe 30 zusammengeführt. Die zusammengeführten Teilleistungen 33, 34 werden über die Sonnenwelle 16 auf die zweite Leistungswelle 23 als Ausgangsleistung 29 übertragen, die als Sonnenwelle 19 ausgebildet ist. Die Ausgangsleistung 29 entspricht, unter Berücksichtigung von Reibungsverlusten, der eingehenden Antriebsleistung 25. Die Drehzahl der zweiten Leistungswelle 23 ist dabei größer als die Drehzahl der ersten Leistungswelle 21. Derart ist das Koppelgetriebe 10 nach FIG 4 für den Betrieb eines nicht näher dargestellten Generators 64 geeignet. Dies ist beispielsweise bei Verwendung des Koppelgetriebes 10 in einer Windkraftanlage 70 der Fall. Bei Einleitung der eingehenden Antriebsleistung 25 in die zweite Leistungswelle 23 ist das Koppelgetriebe auch zum Antreiben einer Industrie-Applikation 80 geeignet. Zu einer weiteren Beeinflussung einer Drehzahl an der ersten und/oder zweiten Leistungswelle 21, 23, können diese jeweils mit einer nicht näher dargestellten Stirnradstufe 44 gekoppelt werden.

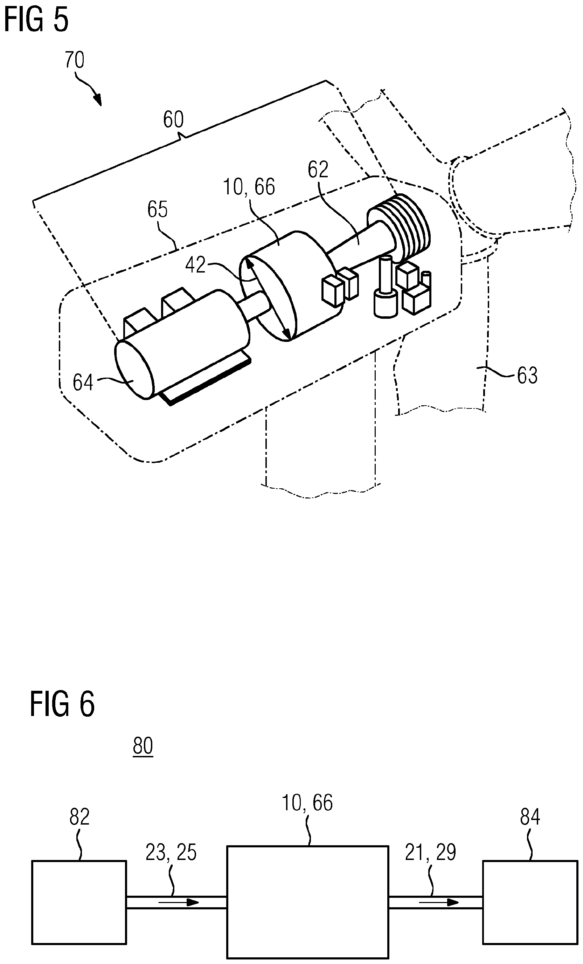

In FIG 5 ist in einer geschnittenen Schrägansicht eine Ausführungsform einer erfindungsgemäßen Windkraftanlage 70 dargestellt. Die Windkraftanlage 70 umfasst einen Rotor 63, der durch Wind in Drehung versetzbar ist. Der Rotor 63 ist über eine Rotorwelle 62 mit einem Getriebe 66 drehmomentübertragend verbunden. Das Getriebe 66 wiederum ist drehmomentübertragend mit einem Generator 64 verbunden. Die Rotorwelle 62, das Getriebe 66 und der Generator 64 gehören zu einem Antriebssatz 60 der in einer Gondel 65 der Windkraftanlage 70 aufgenommen ist. Das Getriebe 66 ist gemäß einer der oben beschriebenen Ausführungsformen ausgebildet. Durch ein entsprechend ausgebildetes Getriebe 66 wird die Effizienz der Windkraftanlage 70 gesteigert. Insbesondere bietet ein beanspruchtes Koppelgetriebe 10 einen reduzierten Durchmesser 42, was die Montage der Windkraftanlage 70 erleichtert.

Eine Ausführungsform einer beanspruchten Industrie-Applikation 80 ist in FIG 6 dargestellt. Die Industrie-Applikation 80 umfasst ein Antriebsmittel 82, das beispielsweise als Elektromotor, als Verbrennungsmotor oder als Hydraulikmotor ausgebildet ist. Das Antriebsmittel 82 ist drehmomentübertragen mit einem Getriebe 66 gekoppelt, das wiederum mit einer mechanischen Anwendung 84 verbunden ist. Das Antriebsmittel 82 ist zum Abgeben einer Antriebsleistung 25 ausgebildet, die über eine zweite Leistungswelle 23 dem Getriebe 66 zugeführt wird. Durch das Getriebe 66 wird die eingehende Antriebsleistung 25, unter Berücksichtigung von Reibungsverlusten, in puncto Drehzahl und Drehmoment gewandelt, als Ausgangsleistung 29 über eine erste Leistungswelle 21 an die mechanische Anwendung 84 weitergeleitet. Dabei ist die Drehzahl an der ersten Leistungswelle 21 niedriger als an der zweiten Leistungswelle 23. Erfindungsgemäß ist das Getriebe 66 als Koppelgetriebe 10 nach einer der oben beschriebenen Ausführungsformen ausgebildet. Die mechanische Anwendung 84 kann als eine Mühle, eine Vertikalmühle, eine Zuckermühle, eine Zementmühle, ein Gesteinsbrecher, ein Förderband, eine Pumpe, eine Hubvorrichtung, eine Müll- oder Schrottpresse ausgebildet sein.

## Patentansprüche

1. Koppelgetriebe (10), umfassend eine erste, eine zweite und eine dritte Planetenstufe (20, 30, 40), wobei jede der Planetenstufen (20, 30, 40) als Stufenkomponenten (11) ein Hohlrad (12), einen Planetenträger (14) und ein Sonnenrad (16) aufweist, **dadurch gekennzeichnet, dass** nur eine Stufenkomponente (11) stationär ausgebildet ist.

2. Koppelgetriebe (10) nach Anspruch 1, **dadurch gekennzeichnet, dass** in der ersten, zweiten und/oder dritten Planetenstufe (20, 30, 40) mindestens fünf Planetenräder (18) aufgenommen sind, die jeweils mit dem zugehörigen Hohlrad (12) kämmen.

3. Koppelgetriebe (10) nach Anspruch 1 oder 2, **dadurch gekennzeichnet, dass** der Planetenträger (14) der ersten oder zweiten Planetenstufe (20, 30) stationär ausgebildet ist.

4. Koppelgetriebe (10) nach einem der Ansprüche 1 bis 3, **dadurch gekennzeichnet, dass** die Hohlräder (12) zumindest zweier Planetenstufen (20, 30, 40) drehstarr miteinander verbunden sind.

5. Koppelgetriebe (10) nach einem der Ansprüche 1 bis 4, **dadurch gekennzeichnet, dass** eine erste Leistungswelle (21) des Koppelgetriebes (11) starr mit zwei Stufenkomponenten (11) der ersten und zweiten Planetenstufe (20, 30, 40) verbunden ist.

6. Koppelgetriebe (10) nach einem der Ansprüche 1 bis 5, **dadurch gekennzeichnet, dass** ein Sonnenrad (16) der zweiten Planetenstufe (30) drehstarr mit dem Planetenträger (14) oder dem Hohlrad (12) der dritten Planetenstufe (40) verbunden ist.

7. Koppelgetriebe (10) nach einem der Ansprüche 1 bis 6, **dadurch gekennzeichnet, dass** das Koppelgetriebe (10) ein Gesamtübersetzungsverhältnis von 10 bis 250, bevorzugt von 35 bis 220, besonders bevorzugt von 50 bis 200, aufweist.

8. Koppelgetriebe (10) nach einem der Ansprüche 1 bis 7, **dadurch gekennzeichnet, dass** das Sonnenrad (16) der dritten Planetenstufe (40) mit einer zweiten Leistungswelle (23) verbunden ist.

9. Koppelgetriebe (10) nach einem der Ansprüche 5 bis 8, **dadurch gekennzeichnet, dass** die erste Leistungswelle (21) als Eingangswelle ausgebildet ist und die zweite Leistungswelle (23) als Ausgangswelle des Koppelgetriebes (10) ausgebildet ist.

10. Koppelgetriebe (10) nach einem der Ansprüche 5 bis 8, **dadurch gekennzeichnet, dass** die erste Leistungswelle (21) als Ausgangswelle ausgebildet ist und die zweite Leistungswelle (23) als Eingangswelle des Koppelgetriebes (10) ausgebildet ist.

11. Koppelgetriebe (10) nach einem der Ansprüche 1 bis 10, **dadurch gekennzeichnet, dass** das Koppelgetrieb (10) dazu ausgebildet ist, eine eingehende Antriebsleistung (25) zwischen der ersten und zweiten Planetenstufe (20, 30) in erste Teilleistungen (32) aufzuteilen, wobei die ersten Teilleistungen (32) 30% bis 70% der eingehenden Antriebsleistung (25) betragen.

12. Koppelgetriebe (10) nach einem der Ansprüche 1 bis 11, **dadurch gekennzeichnet, dass** die erste und/oder dritte Planetenstufe (20, 40) mit zumindest einer Stirnradstufe (44) gekoppelt ist.

13. Antriebsstrang (70) für eine Windkraftanlage (80), umfassend eine Rotorwelle (), die mit einem Getriebe (66) verbunden ist, das wiederum drehmomentübertragend mit einem Generator (64) verbunden ist, **dadurch gekennzeichnet, dass** das Getriebe (66) als ein Koppelgetriebe (10) nach einem der Ansprüche 1 bis 12 ausgebildet ist.

14. Windkraftanlage (80), umfassend einen an einer Gondel (65) angebrachten Rotor (63), der drehmomentübertragend mit einer Rotorwelle (62) verbunden ist, **dadurch gekennzeichnet, dass** die Rotorwelle (62) zu einem Antriebsstrang (60) nach Anspruch 13 gehört.

15. Industrie-Applikation (80), umfassend ein Antriebsmittel (82), das mit einem Getriebe (66) verbunden ist, das wiederum mit einer mechanischen Anwendung (84) gekoppelt ist, **dadurch gekennzeichnet, dass** das Getriebe (66) als ein Koppelgetriebe (10) nach einem der Ansprüche 1 bis 12 ausgebildet ist.
